# EUROPEAN PATENT SPECIFICATION

(11) **EP 4 271 021 B1**
(45) Date of publication and mention of the grant of the patent: **17.07.2024**
(21) Application number: 22170898.5
(22) Date of filing: 29.04.2022
(51) Int. Cl.: H04W 16/14, G01S 19/42

(54) **METHOD AND GADGET FOR ENABLING A TIME-DUPLEX, SHARED FREQUENCY-BAND OPERATION OF AN INTERMITTENT MOBILE RADIO SYSTEM AND A WIRELESS COMMUNICATION SYSTEM**
VERFAHREN UND GERÄT ZUM ERMÖGLICHEN EINES ZEIT-DUPLEX, GEMEINSAMEN FREQUENZBANDBETRIEBS EINES INTERMITTIERENDEN MOBILFUNKSYSTEMS UND EINES DRAHTLOSEN KOMMUNIKATIONSSYSTEMS
PROCÉDÉ ET GADGET POUR ACTIVER UNE OPÉRATION DE BANDE DE FRÉQUENCE DUPLEX TEMPORELLE D'UN SYSTÈME DE RADIO MOBILE INTERMITTENT ET SYSTÈME DE COMMUNICATION SANS FIL

(43) Date of publication of application: 01.11.2023
(73) Proprietor: Siemens Aktiengesellschaft, 80333 München (DE)
(72) Inventor: Michailow, Nicola, 81825 München (DE); Zeiger, Florian, 85635 Höhenkirchen-Siegertsbrunn (DE); Kornbichler, Andreas, 83623 Dietramszell (DE)
(74) Representative: Siemens Patent Attorneys

(56) References cited:
- QUEROL J. ET AL: "A Review of RFI Mitigation Techniques in Microwave Radiometry", REMOTE SENSING, vol. 11, no. 24, 1 December 2019 (2019-12-01), CH, pages 3042, XP055974846, ISSN: 2072-4292, DOI: 10.3390/rs11243042
- GASIEWSKI J ET AL: "Interference mitigation in passive microwave radiometry", IGARSS 2002. IEEE 2002 INTERNATIONAL GEOSCIENCE AND REMOTE SENSING SYMPOSIUM. TORONTO, SWEDEN, JUNE 24 -28, 2002; [IEEE INTERNATIONAL GEOSCIENCE AND REMOTE SENSING SYMPOSIUM], NEW YORK, NY : IEEE, US, vol. 3, 24 June 2002 (2002-06-24), pages 1682 - 1684, XP010598322, ISBN: 978-0-7803-7536-9

## Description

The invention refers to a method for enabling a time-duplex, shared frequency-band operation of an intermittent mobile radio system and a wireless communication system according to the preamble claim 1 and a gadget for enabling a time-duplex, shared frequency-band operation of an intermittent mobile radio system and a wireless communication system according to the preamble claim 9.

Wireless communication technology currently under development concerning a sixth generation standard, called as 6G, are gaining momentum in its research efforts, namely the question which spectrum bands in the range between 100 GHz and 1 THz can be used for wireless communication networks, which is at the heart of current discussions.

Many frequencies in this range are currently assigned for exclusive use, e.g., by "Earth Exploration Satellite Services (EESS)". These services pass regularly throughout a day or in the course of weeks over certain geographical location and take measurements of various kinds.

Often, other wireless communication system services, like mobile networks, are not allowed to operate in these bands, because they could pose as interference to sensitive measurement equipment of EESS-related satellites. While this has worked out in the past, in the future blocking entire frequency bands for exclusive use by satellites might not be an economically feasible solution.

From a ground station perspective, the intermittent nature of the EESS-services with the EESS-related satellites - for this reason it can be spoken of the EESS-service as an intermittent mobile radio system - would in principle allow a time-duplex operation with a wireless communication system, such as a terrestrial mobile communication system. This would lead to a more efficient use of scarce spectrum resources worldwide.

According to the state of the art the cited interference can be avoided by spectrum regulation:
- So, the spectrum is used exclusively for the "Earth Exploration Satellite Services (EESS)" respectively the intermittent mobile radio system
- Spectrum emission mask for ground systems, such as the wireless communication system or the terrestrial mobile communication system towards the sky.

A further option for avoiding the cited interference, the "Earth Exploration Satellite Services (EESS)" respectively the intermittent mobile radio system tries to mitigate interferences in the measurements, e.g., through statistics:
- The document of OUEROL J. ET AL describes "A Review of RFI Mitigation Techniques in Microwave Radiometry",REMOTE SENSING, vol. 11, no. 24, 1 December 2019, page 3042, XP055974846,CH ISSN: 2072-4292, DOI: 10.3390/ rs11243042(https://www.mdpi.com/2072-4292/11/24/3042 ).

The document of GASIEWSKI J ET AL describes "Interference mitigation in passive microwave radiometry", TORONTO, SWEDEN, JUNE 24 -28, 2002; IEEE INTERNATIONAL GEOSCIENCE AND REMOTE SENSING SYMPOSIUM, NEW YORK, NY : IEEE, US, vol. 3, 24 June 2002, pages 1682-1684, XP010598322,(https:// cimss.ssec.wisc.edu/itwg/itsc/itsc12/posters/Gasiewsk).

It is an objective of the invention to a method and a gadget for enabling a time-duplex, shared frequency-band operation of an intermittent mobile radio system and a wireless communication system, by which a verified time-duplex co-existence of the wireless communication system and the intermittent mobile radio system is provided.

This objective is solved with regard to a method defined in the preamble of claim 1 by the features in the characterizing part of claim 1.

The objective is further solved with regard to a gadget defined in the preamble of claim 9 by the features in the characterizing part of claim 9.

The main idea of the invention according to the claims 1 and 9 is to enable a time-duplex, shared frequency-band operation of an intermittent mobile radio system and a wireless communication system, by which at a base station or an access point of the wireless communication system with each a wireless transmitter for the wireless communication input data in the form of localization data representing the location of the base station or access point, mobile radio system data and mobile radio detection data are available it is proposed to
- calculate based on the input data either a disturbed contact time window for which the intermittent mobile radio system regarding the time-duplex, shared frequency-band operation is disturbed by transmissions of the wireless communication system in the shared frequency-band, or a non-disturbed contact time window for which the intermittent mobile radio system regarding the time-duplex, shared frequency-band operation is not disturbed by transmissions of the wireless communication system in the shared frequency-band,
- compare a local device time of the base station or access point with the calculated contact time window such when due to this comparison the local base station time approaches the contact time window that (i) in the "either"-case the wireless transmitter is shut down in a shutdown process and (ii) in the "or"-case the wireless transmitter is switched on in a switch-on process.

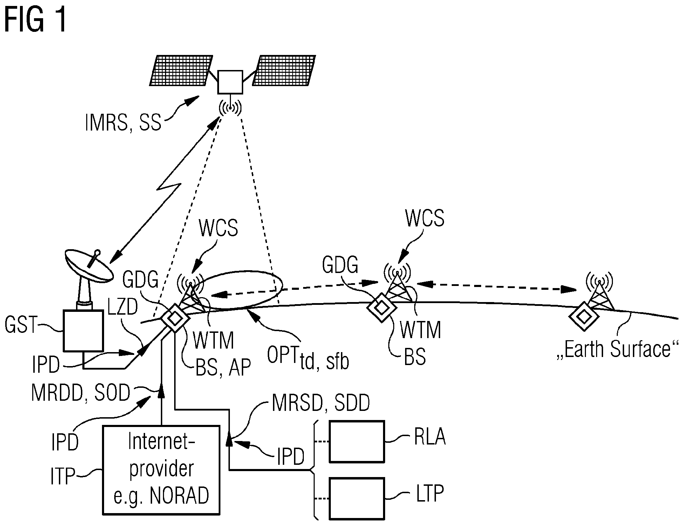

The advantage of the idea solving the addressed problem (objective of the invention) and summarized above lies according to the claims 8 and 16 in that the intermittent mobile radio system is preferably a satellite system working on an "Earth exploration satellite service <EESS>" and providing satellite system data as the mobile radio system data and satellite orbit data as the mobile radio detection data (cf. FIGURE 1 with the corresponding description).

So, in contrast to current solutions presented in the introductory part of the present application according to which it is prohibited non-satellite users to use certain frequency bands, which leads to ineffective use of worldwide scarce spectrum resources, the proposed advantageous approach concerning the satellite system working on the "Earth exploration satellite service <EESS>" allows to control and monitor the use of satellite frequency bands by non-satellite users at times when and at places where satellites do not need them.

Consider the wireless communication system, which could be a ground-based communications network, e.g., 5G or 6G network. In order to achieve higher spectrum efficiency, it is allowed to operate in a frequency band that is shared with satellite services, e.g., the "Earth exploration satellite service <EESS>". The satellite service has priority access to said frequency bands and it must never be disturbed by the ground-based communications network.

The idea, underlying the invention, can be implemented preferably by a gadget, called as a "time division duplex (TDD) verification module", which enables a time-duplex, shared frequency-band operation of the intermittent mobile radio system respectively the satellite system and the wireless communication system respectively the ground-based communications network, e.g., 5G or 6G network.

Thereby the TDD verification module is connected to or included in at least one base station or access point of the wireless communication system with the wireless transmitter (cf. claim 17).

The gadget or module ensures that a primary user of the shared frequency band - e.g., a satellite of the satellite system, called as primary system - is not interfered by a secondary user of the shared frequency band - e.g., the base station or the access point with the transmitter of the wireless communication system, called as secondary system. This is realized by that the module sends shutdown commands or alternatively switch-on commands to the wireless transmitter.

The gadget or module further serves as neutral third party between operators of the primary/secondary systems and a local or international regulatory body or agency, which stores a tamper-proof log that can be reviewed in case spectrum license terms have been breached.

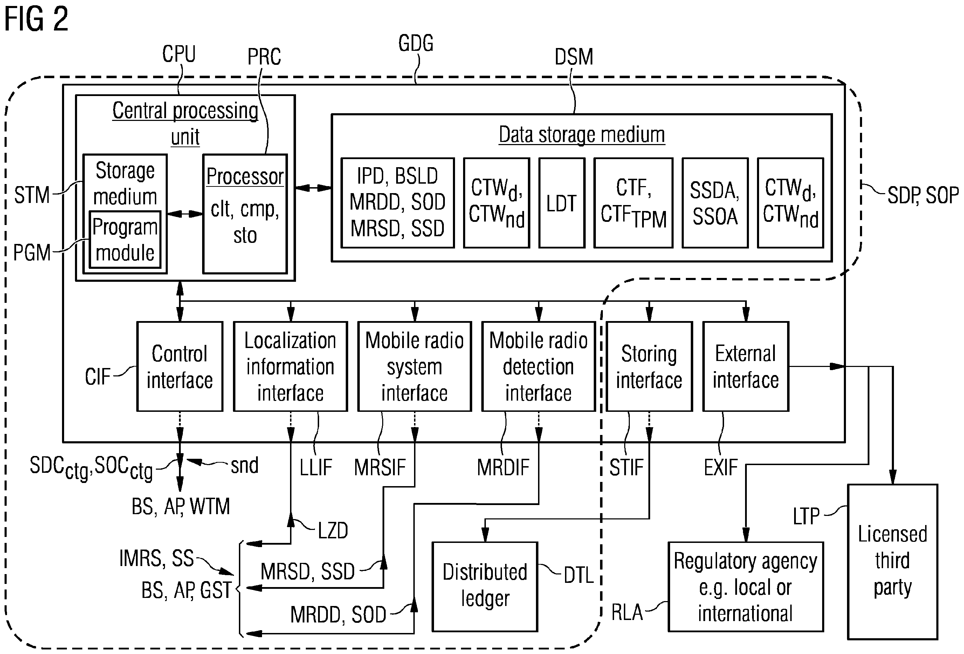

Regarding the FIGURE 1-depicted "Earth exploration satellite service <EESS>" scenario enabling the time-duplex, shared frequency-band operation the involved components are (cf. FIGURE 2):
- The gadget or the TDD verification module is a component that is preferably part of the wireless base station and/or an access point, which executes and monitors a validated, tamper-proofed sequence of functions, to ensure that the wireless transmitter of the wireless base station and/or access point operates only at times when and at locations where it is allowed, e.g., to ensure that disturbances with sensitive satellite systems do not occur.
- A location "Global Positioning System <GPS>" is either a service, a local storage or a GPS-interface and provides the position or location of the wireless base station and/or access point with the wireless transmitter.
- A local or international regulatory agency is a country specific or international regulatory body, responsible for frequency assignments and radio frequency usage control and/or monitoring. (in Germany it is called: Bundesnetzagentur, BNetzA).
- A satellite orbit database provides orbit data of the satellite system. This data is in general publicly available for satellite systems, e.g., https://celestrak.com. As of today, it is used by terrestrial antenna systems and ground stations to calculate a proper antenna pointing to a given satellite, e.g., for satellite TV or satellite Internet. Usually, satellite orbit data is given in a standard "Two Line Element <TLE>"-format.
- A distributed ledger is used to store a tamper-proof record of the activity/inactivity times of the wireless base station and/or access point. These sequences can later be checked by the regulatory agency in order to validate that the wireless base station and/or access point operates according to the terms of the spectrum usage license.
- A transmitter control in the wireless base station and/or access point can turn the wireless transmitter (RF-transmitter) on and off.
- A "Trusted Platform Module <TPM>" is a trusted platform module that provides certificate of the gadget or the TDD module (tamper-proof).

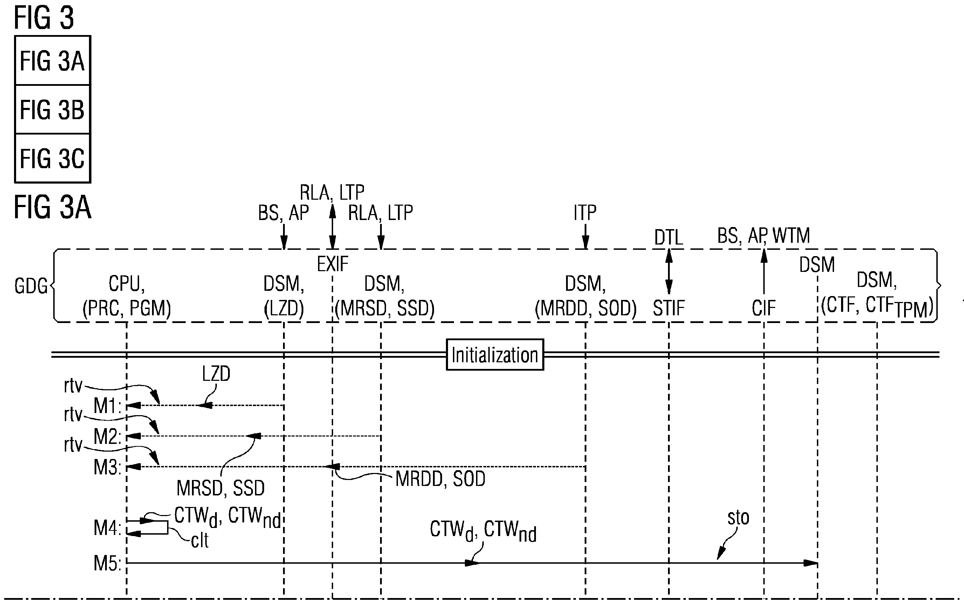

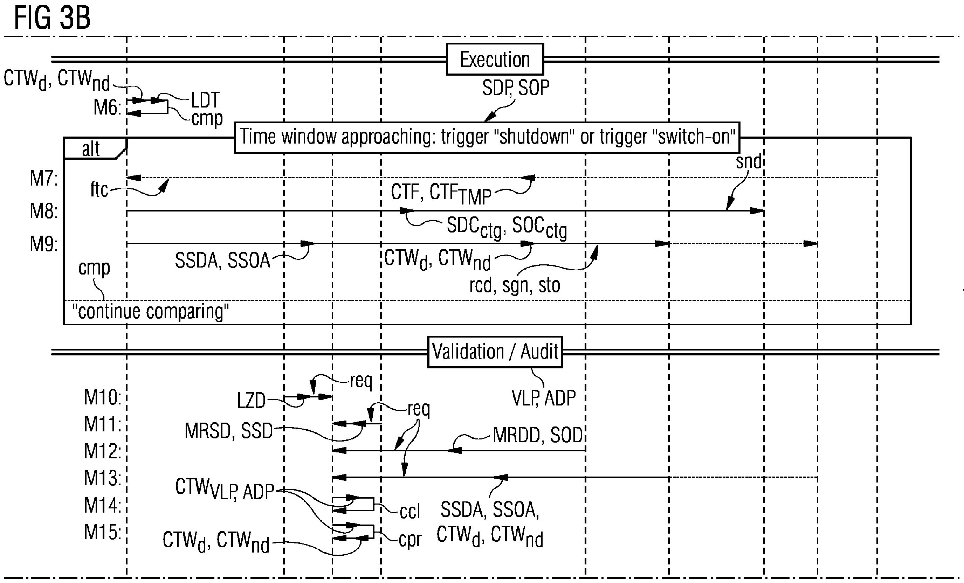

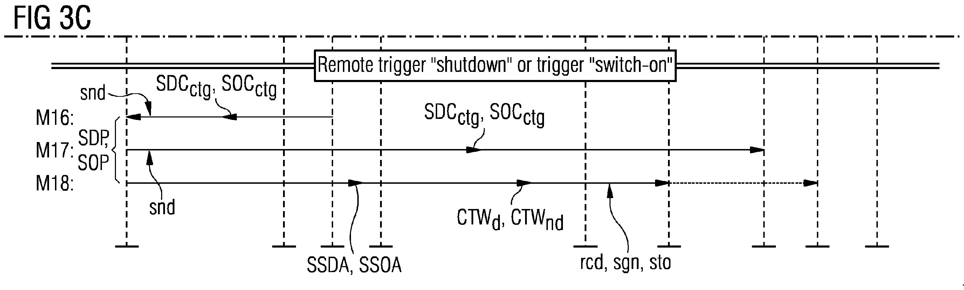

Regarding the FIGURE 1-depicted "Earth exploration satellite service <EESS>" scenario enabling the time-duplex, shared frequency-band operation the carried out operation steps are (cf. FIGURE 3):
As soon as the wireless base station and/or access point with the wireless transmitter and including the gadget or the TDD verification module is switched on, an initialization phase is executed (Initialization). The gadget or TTD module calculates a contact window time for the satellite system that may be disturbed by transmissions in the assigned frequency or not disturbed by transmissions in the assigned frequency. Therefore, the gadget or TTD module needs three inputs:
- A current location of the wireless base station and/or access point can be obtained from the "Global Positioning System <GPS>", a location service or by a parameter setting in the gadget or TTD module.
- Data about all relevant satellite systems that are known to use the shared frequency. This data is requested form the local or international regulatory agency or body and can either be obtained "online", e.g., via Internet, or through a local storage of a licensed third party, e.g., an operator of the wireless communication system.
- Satellite orbit data describes the satellite orbits, e.g., the TLE-data, and can be obtained "online" via an Internet-provider, e.g., from "North American Aerospace Defense Command <NORAD>".

The calculated contact time window (disturbed or not disturbed) of the gadget or TTD module with satellites are locally stored and used in an operation phase given by a shutdown process in the case of the disturbed contact time window and given by a switch-on process in the case of the non-disturbed contact time window.

As soon as the contact time window is calculated, the gadget or TTD module starts comparing the local time with the contact time window of the relevant satellite system. When the contact time window is approached, the gadget or TTD module sends a shutdown command, in particular cryptographically-signed, according to the shutdown process or a switch-on command, in particular cryptographically-signed, according to the switch-on process to the wireless transmitter of the wireless base station and/or access point.

This shutdown or switch-on action is executed by the gadget or TTD module immediately, and its success is recorded. If successful, the gadget or TTD module signs, in particular cryptographically, this action with its own certificate, e.g., obtained by its "Trusted Platform Module <TPM>" stored in a data storage medium, and stores it locally, e.g., in a data storage medium, and/or in the distributed ledger for later validation and audits (cf. claims 2, 3, 10 and 11).

The validations and audits can be executed optionally by the local or international regulatory agency/body or a licensed third party, e.g., the operator of the wireless communication system. Therefore, the regulatory agency/body or the third party may request records of the gadget's or TTD module's contact time window information in the shutdown process or the gadget's or TTD module's time window information in the switch-on process from the data storage medium of the gadget or TTD module, the corresponding records from the distributed ledger, e.g., which could be used optionally for higher confidence, the location of the wireless base station and/or access point, as well as the satellite system data and the satellite orbit data. Then, the regulatory agency/body or the third party can calculate a validation process and/or the audit process-related contact time window for the gadget or TTD module can compare the results with the requested contact time window from the records (cf. claims 4 and 12).

Further advantageous developments of the invention claimed in the dependent claims concern:
- The regulatory agency or the third party triggers based on the calculated the validation process and/or the audit process-related contact time window the shutdown process and the switch-on process of the wireless transmitter of the wireless base station and/or access point. This option describes an "override" of the gadget or TTD module transmitter control, triggered by the regulatory agency/body or the third party. Therefore, the regulatory agency/body or the third party retrieves the location of the wireless base station and/or access point, as well as the satellite system data and the satellite orbit data and calculated the gadget or TTD module shutdown times related to the calculated disturbed or not disturbed contact time window.

Through a secured communication channel, certified shutdown trigger signals are sent from the regulatory agency/body or the third party to the gadget or TTD module and immediately executed by the TDD verification module. The success of a shutdown procedure is again signed and stored locally, and/or in the distributed ledger for later validation (cf. claims 5 and 13).
- The satellite system can be extended so that any other intermittent mobile radio system can be considered for calculating shutdown times related to the calculated disturbed or not disturbed contact time window. Therefore, the data interface for satellite orbit data is extended so that other trajectories of mobile transmitting devices, such as "Unmanned Aerial Vehicles <UAVs>", "Automated Guided Vehicles <AGVs>", cars, trucks, planes etc., of the intermittent mobile radio system can be received and used for the shutdown or the switch-on time calculations. The interface to the regulatory agency/body or the third party is extended to receive IDs of the other intermittent mobile radio system that need to be considered (cf. claims 7 and 15).

Thus, the satellite orbit data could be replaced by trajectory descriptive data relating to trajectories of mobile transmitting devices, such as "Unmanned Aerial Vehicles <UAVs>", "Automated Guided Vehicles <AGVs>", cars, trucks, planes etc., of the intermittent mobile radio system. In this context one could speak more generally about mobile radio detection data.
- Instead of the satellite orbit data or the trajectory descriptive data, respectively more generally the mobile radio detection data, sensor data generated by a radar or a camera detecting mobile transmitting devices of the intermittent mobile radio system could be used. This means the device can use an attached sensor, e.g., the radar or the camera, to detect contacts with satellites. As soon as the sensor detects the intermittent mobile radio system, the gadget or TTD module deactivates the wireless transmitter according to above-described procedures (cf. claim 6 and 14).

Moreover, additional advantageous developments of the invention concern
- In case the wireless transmitter of the wireless base station and/or access point supports beamforming or has antenna segments that can control the transmitter characteristics, e.g., azimuth, elevation, contact time windows can be calculated for the different antenna segments/directions. Thus, only the affected antenna segments/directions shutdown operations when other intermittent mobile radio systems are approaching.
- In order to operate in certain frequency bands, the wireless base station and/or access point with the wireless transmitter and including the gadget or TTD module requires an active connection to the operator and/or regulatory agency or body. In case extended reliability of operations is required, the gadget or TTD module is configured in a way, that it needs a keep-alive signal from the operator/regulatory agency or body to keep the wireless transmitter the wireless base station and/or access point turned on. In case the keep-alive signal does not arrive in time, the gadget respectively the TDD verification module turns of the wireless transmitter according to the above-described procedure.

Moreover, advantageous further developments of the invention arise out of the following description of a preferred embodiment of the invention according to FIGURES 1 to 3. They show:
FIGURE 1 an "Earth exploration satellite service <EESS>" scenario enabling a time-duplex, shared frequency-band operation of a satellite system working on an "Earth exploration satellite service <EESS>" and a wireless communication system,
FIGURE 2 a basic structure of a gadget enabling generally a time-duplex, shared frequency-band operation of an intermittent mobile radio system and a wireless communication system,
FIGURE 3 an operation flowchart of gadget-controlled/involved measures to enable generally the time-duplex, shared frequency-band operation of the intermittent mobile radio system and the wireless communication system.

FIGURE 1 shows an "Earth exploration satellite service <EESS>" scenario enabling a time-duplex, shared frequency-band operation OPT_{td,sfb} of a satellite system SS working on an "Earth exploration satellite service <EESS>" and a wireless communication system WCS. Regarding the depicted scenario it is also possible to have instead of the satellite system SS working on an "Earth exploration satellite service <EESS>" - as optional scenario - an intermittent mobile radio system IMRS, which must not be satellite based but is also intermittent as the satellite system SS working on the "Earth exploration satellite service <EESS>".

The satellite system SS working on the "Earth exploration satellite service <EESS>" includes besides the satellite orbiting the earth a ground station GST.

On the earth surface there are located and operated numerous wireless communication systems WCS. In the FIGURE 1 there are three of such wireless communication systems WCS depicted. Each depicted wireless communication system WCS could stand thereby for a number of further wireless communication systems WCS. But nevertheless, it is however also possible that each wireless communication system WCS stands for no further wireless communication systems WCS.

The wireless communication system WCS includes a base station BS or alternatively an access point AP each with a wireless transmitter WTM for the wireless communication and preferably a gadget GDG for enabling the time-duplex, shared frequency-band operation OPT_{td,sfb}. But it is also possible that the gadget GDG can be a facility separated from the base station BS or the access point AP.

Furthermore, at each base station BS or access point AP input data IPD are available.

In the case of the satellite system SS working on the "Earth exploration satellite service <EESS>" the input data IPD includes localization data LZD in the form of "Global Positioning System <GPS>"-data representing the location of the base station BS or access point AP, satellite system data SSD and satellite orbit data SOD. While the localization data LZD is received via the ground station GST, the satellite system data SSD is received from a local or international regulatory agency RLA, which is a country specific or international regulatory body, responsible for frequency assignments and radio frequency usage control and/or monitoring, or alternatively from a licensed third party LTP, which could be for instance the operator of the wireless communication system WCS, and the satellite orbit data SOD is received from an Internet-provider ITP, e.g., from "North American Aerospace Defense Command <NORAD>".

The regulatory agency RLA or the licensed third party LTP maintains a database providing orbit data of the satellite system. This data is in general publicly available for satellite systems, e.g., https://celestrak.com. As of today, it is used by terrestrial antenna systems and ground stations to calculate a proper antenna pointing to a given satellite, e.g., for satellite TV or satellite Internet. Usually, satellite orbit data is given in a standard "Two Line Element <TLE>"-format.

In the case of the intermittent mobile radio system IMRS the input data IPD includes localization data LZD representing the location of the base station BS or access point AP, mobile radio system data MRSD and mobile radio detection data. The mobile radio detection data MRDD could be sensor data generated by a radar or a camera detecting mobile transmitting devices of the intermittent mobile radio system IMRS.

Furthermore, the mobile radio detection data MRDD could be trajectory descriptive data relating to trajectories of mobile transmitting devices, such as "Unmanned Aerial Vehicles <UAVs>", "Automated Guided Vehicles <AGVs>", cars, trucks, planes etc., of the intermittent mobile radio system IMRS.

FIGURE 2 shows a basic structure of a gadget GDG enabling generally a time-duplex, shared frequency-band operation OPT_{td,sfb} of the intermittent mobile radio system IMRS and the wireless communication system WCS.

According to this structure the gadget GDG has a central processing unit CPU including a non-volatile, processor-readable storage medium STM having processor-readable program-instructions of a program module PGM for enabling the time-duplex, shared frequency-band operation stored in the non-transitory, processor-readable storage medium STM and a processor PRC connected with the storage medium STM executing the processor-readable program-instructions of the program module PGM to enable the time-duplex, shared frequency-band operation.

In the gadget GDG the cited central processing unit CPU is connected with a data storage medium DSM to store inter alia the input data IPD, LZD, MRSD, SSD, MRDD, SOD as discussed above in the context of describing the FIGURE 1.

Moreover, the central processing unit CPU is connected with (i) a control interface CIF via which the wireless transmitter WTM is controlled, (ii) a localization information interface LLIF via which the localization data LZD are received, (iii) a mobile radio system interface MRSIF via which the mobile radio system data MRSD respectively the satellite system SSD are received and (iv) a mobil radio detection interface MRDIF via which the mobile radio detection data MRDD respectively the satellite orbit data SOD are received.

Due to this connection to the cited interfaces CIF, LLIF, MRSIF, MRDIF and the cited data storage medium DSM the central processing unit CPU is forming a functional unit which is designed such that based on the cited input data IPD, LZD, MRSD, SSD, MRDD, SOD it is calculated clt by the processor PRC of the central processing unit CPU executing the processor-readable program-instructions of the program module PGM to enable the time-duplex, shared frequency-band operation either a disturbed contact time window CTW_{d} for which the intermittent mobile radio system IMRS respectively the satellite system SS regarding the time-duplex, shared frequency-band operation OPT_{td,sfb} is disturbed by transmissions of the wireless communication system WCS in the shared frequency-band, or a non-disturbed contact time window CTW_{nd} for which the intermittent mobile radio system IMRS respectively the satellite system SS regarding the time-duplex, shared frequency-band operation OPT_{td,sfb} is not disturbed by transmissions of the wireless communication system WCS in the shared frequency-band.

Furthermore, the formed functional unit is designed such that the processor PRC of the central processing unit CPU executing the processor-readable program-instructions of the program module PGM to enable the time-duplex, shared frequency-band operation
- compares cmp a local device time LDT of the base station or access point with the calculated contact time window CTW_{d}, CTW_{nd} such when due to this comparison the local device time LDT approaches the contact time window CTW_{d}, CTW_{nd} that (1) in the "either"-case the wireless transmitter WTM of the base station BS or access point AP is shut down in a shutdown process SDP by sending snd a shutdown command SDC_{ctg}, which is preferably cryptographically-signed, via the control interface CIF to the wireless transmitter (WTM) and (2) in the "or"-case the wireless transmitter WTM of the base station BS or access point AP is switched on in a switch-on process SOP by sending sdn a switch-on command SOC_{ctg}, which is preferably cryptographically-signed, via the control interface CIF to the wireless transmitter WTM;
- stores sto the calculated contact time window CTW_{d}, CTW_{nd} in the data storage medium DSM.

The shutdown process SDP has the consequence that the wireless transmitter WTM is not active or in operation, when by its operation the intermittent mobile radio system IMRS respectively the satellite system SS would be disturbed or influenced.

In the other way round the switch-on process SOP has the consequence that the wireless transmitter WTM is active or in operation, when by its operation the intermittent mobile radio system IMRS respectively the satellite system SS would not be disturbed or influenced.

The shutdown process SDP and the switch-on process SOP are described further below with respect to FIGURE 3.

Finally, the central processing unit CPU of the gadget GDG is connected in addition with a storing interface STIF via which the central processing unit CPU respectively the gadget GDG is connected with a distributed ledger DTL and with an external interface EXIF via which the central processing unit CPU respectively the gadget GDG is connected with a regulatory agency RLA, which is preferably a country specific (local) or international regulatory body, responsible for frequency assignments and radio frequency usage control and/or monitoring and/or with a licensed third party LTP, e.g., an operator of the wireless communications system WCS.

For what purpose the connection between the central processing unit CPU respectively the gadget GDG and the distributed ledger DTL on the one hand and the regulatory agency RLA and/or the licensed third party LTP on the other hand are used in the context of the formed functional unit will be described next in connection with FIGURE 3.

FIGURE 3 shows an operation flowchart of gadget-controlled/involved measures M1..M18 carried out by the functional unit formed by the central processing unit CPU being connected with the interfaces CIF, LLIF, MRSIF, MRDIF, STIF, EXIF and the data storage medium DSM to enable generally the time-duplex, shared frequency-band operation OPT_{td,sfb} of the intermittent mobile radio system IMRS, SS and the wireless communication system WCS.

So, the measures including a first measure M1, a second measure M2, a third measure M3, a fourth measure M4 and a fifth measure M5 concern an initialization of the time-duplex, shared frequency-band operation enablement.

According to the first measure M1 the localization data LZD representing the location of the base station BS or the access point AP, retrieved rtv therefrom and stored in the data storage medium DSM are passed to the processor PRC of the central processing unit CPU.

According to the second measure M2 the mobile radio system data MRSD respectively the satellite system data SSD, retrieved rtv from the regulatory agency RLA or the licensed third party LTP and stored also in the data storage medium DSM are passed to the processor PRC of the central processing unit CPU.

According to the third measure M3 the mobile radio detection data MRDD respectively the satellite orbit data SOD, retrieved rtv from the regulatory agency RLA or the licensed third party LTP and stored also in the data storage medium DSM are passed to the processor PRC of the central processing unit CPU.

According to the fourth measure M4 the processor PRC executing the processor-readable program-instructions of the program module PGM to enable the time-duplex, shared frequency-band operation calculates clt the calculated contact time window CTW_{d}, CTW_{nd}.

According to the fifth measure M5 the processor PRC stores sto the calculated contact time window CTW_{d}, CTW_{nd} into the data storage medium DSM
So, the measures including a sixth measure M6, a seventh measure M7, an eighth measure M8 and a ninth measure M9 concern an execution of the time-duplex, shared frequency-band operation enablement.

According to the sixth measure M6 the processor PRC executing the processor-readable program-instructions of the program module PGM to enable the time-duplex, shared frequency-band operation compares cmp the local device time LDT of the base station BS or the access point AP with the calculated contact time window CTW_{d}, CTW_{nd}.

When due to this comparison the local device time LDT approaches the contact time window CTW_{d}, CTW_{nd} the wireless transmitter WTM of the base station BS or access point AP either is shut down in the shutdown process SDP or switched on in the switch-on process SOP. The comparison is continued preferably as long as the local device time LDT approaches the contact time window CTW_{d}, CTW_{nd}.

The shutdown process SDP or the switched on in the switch-on process SOP includes according to the operation flowchart the following measures M7 to M9.

According to the seventh measure M7 the processor PRC executing the processor-readable program-instructions of the program module PGM to enable the time-duplex, shared frequency-band operation fetches ftc from the data storage medium DSM a certificate CTF, which could be preferably a "Trusted Platform Module <TPM>"-generated certificate CTF_{TPM}.

According to the eighth measure M8 the processor PRC sends snd via the control interface CIF to the wireless transmitter WTM with respect to the shutdown process SDP the shutdown command SDC_{ctg}, which is preferably cryptographically-signed, and with respect to the switch-on process SOP the switch-on command SOC_{ctg}, which is also preferably cryptographically-signed.

According to the ninth measure M9 the processor PRC either, when the shutdown is successful, records red with respect to the shutdown process SDP a successful shutdown action SSDA, signs sgn the shutdown action SSDA with the certificate CTF respectively the "Trusted Platform Module <TPM>"-generated certificate CTF_{TPM} and stores sto the certificate-signed shutdown action locally in the data storage medium DSM or via the storing interface STIF included in the formed functional unit in the distributed ledger DTL for a validation process VLP and/or an audit process ADP or, when the switch-on is successful, records red with respect to the switch-on process SOP a successful switch-on action SSOA, signs sgn the switch-on action SSOA with the certificate CTF respectively the "Trusted Platform Module <TPM>"-generated certificate CTF_{TPM} and stores sto the certificate-signed switch-on action locally in the data storage medium DSM or via the storing interface STIF included in the formed functional unit in the distributed ledger DTL for a validation process VLP and/or an audit process ADP.

So, the measures including a tenth measure M10, an eleventh measure M11, a twelfth measure M12, a thirteenth measure M13, a fourteenth measure M14 and a fifteenth measure M15 concern a validation/audit of the time-duplex, shared frequency-band operation enablement.

Concerning this validation/audit the functional unit supplemented by the external interface EXIF being connected to the central processing unit CPU, is formed such that via the external interface EXIF the regulatory agency RLA or the licensed third party LTP carry out the validation process VLP and/or the audit process ADP.

For this purpose and according to the tenth measure M10 the localization data LZD representing the location of the base station BS or the access point AP are requested req by the regulatory agency RLA or the licensed third party LTP via the external interface EXIF and the processor PRC of the central processing unit CPU from the data storage medium DSM.

For this purpose and according to the eleventh measure M11 the mobile radio system data MRSD respectively the satellite system data SSD are requested req by the regulatory agency RLA or the licensed third party LTP via the external interface EXIF and the processor PRC of the central processing unit CPU from the data storage medium DSM.

For this purpose and according to the twelfth measure M12 the mobile radio detection data MRDD respectively the satellite orbit data SOD are requested req by the regulatory agency RLA or the licensed third party LTP via the external interface EXIF and the processor PRC of the central processing unit CPU from the data storage medium DSM.

For this purpose and according to the thirteenth measure M13 the records of the shutdown action SSDA and the switch-on action SSOA, the certificate-signed actions and the calculated contact time window CTW_{d}, CTW_{nd} are requested req by the regulatory agency RLA or the licensed third party LTP either from the distributed ledger DTL or via the external interface EXIF and the processor PRC of the central processing unit CPU from the data storage medium DSM.

For this purpose and according to the fourteenth measure M14 the regulatory agency RLA or the licensed third party LTP calculates ccl based on the localization data LZD, the mobile radio system data MRSD respectively the satellite system data SSD and the mobile radio detection data MRDD respectively the satellite orbit data SOD a validation process and/or the audit process-related contact time window CTW_{VLP,ADP}.

Finally, for this purpose and according to the fifteenth measure M15 the regulatory agency RLA or the licensed third party LTP compares cpr the requested contact time window CTW_{d}, CTW_{nd} with the validation process and/or the audit process-related contact time window CTW_{VLP,ADP}.

At the end, the measures including a sixteenth measure M16, a seventeenth measure M17 and an eighteenth measure M18 concern a remote trigger "shutdown" or trigger "switch-on" of the time-duplex, shared frequency-band operation enablement.

Concerning this remote triggering the functional unit supplemented by the external interface EXIF being connected to the central processing unit CPU, is formed such that via the external interface EXIF the regulatory agency RLA or the licensed third party LTP carry out the remote triggering.

According to the sixteenth measure M16 to the eighteenth measure M18 the regulatory agency RLA or the licensed third party LTP is able based on the calculated the validation process and/or the audit process-related contact time window CTW_{VLP,ADP} to trigger via the external interface EXIF the shutdown process SDP and the switch-on process SOP of the wireless transmitter WTM.

For this purpose and according to the sixteenth measure M16 and the seventeenth measure M17 the regulatory agency RLA or the licensed third party LTP sends snd via the external interface EXIF to the central processing unit CPU and from there to the wireless transmitter WTM with respect to the shutdown process SDP the shutdown command SDC_{ctg}, which is also preferably cryptographically-signed, and with respect to the switch-on process SOP the switch-on command SOC_{ctg}, which is also preferably cryptographically-signed.

Finally, for this purpose and according to the eighteenth measure M18 and in accordance to the ninth measure M9 the processor PRC either, when the shutdown is successful, records red with respect to the shutdown process SDP a successful shutdown action SSDA, signs sgn the shutdown action SSDA with the certificate CTF respectively the "Trusted Platform Module <TPM>"-generated certificate CTF_{TPM} and stores sto the certificate-signed shutdown action locally in the data storage medium DSM or via the storing interface STIF included in the formed functional unit in the distributed ledger DTL or, when the switch-on is successful, records red with respect to the switch-on process SOP a successful switch-on action SSOA, signs sgn the switch-on action SSOA with the certificate CTF respectively the "Trusted Platform Module <TPM>"-generated certificate CTF_{TPM} and stores sto the certificate-signed switch-on action locally in the data storage medium DSM or via the storing interface STIF included in the formed functional unit in the distributed ledger DTL.

## Claims

1. Method for enabling a time-duplex, shared frequency-band operation (OPT_{td,sfb}) of an intermittent mobile radio system (IMRS, SS) and a wireless communication system (WCS), by which at a base station (BS) or an access point (AP) of the wireless communication system (WCS) with each a wireless transmitter (WTM) for the wireless communication following input data (IPD) are available
- localization data representing the location of the base station or access point (LZD),
- mobile radio system data (MRSD, SSD),
- mobile radio detection data (MRDD, SOD),
**characterized by**:
**a**) calculating (clt) based on the input data (IPD, LZD, MRSD, SSD, MRDD, SOD)
**a1**) a disturbed contact time window (CTW_{d}) for which the intermittent mobile radio system (IMRS, SS) regarding the time-duplex, shared frequency-band operation (OPT_{td,sfb}) is disturbed by transmissions of the wireless communication system (WCS) in the shared frequency-band, or
**a2**) a non-disturbed contact time window (CTW_{nd}) for which the intermittent mobile radio system (IMRS, SS) regarding the time-duplex, shared frequency-band operation (OPT_{td,sfb}) is not disturbed by transmissions of the wireless communication system (WCS) in the shared frequency-band,
**b**) comparing (cmp) a local device time (LDT) of the base station or access point with the calculated contact time window (CTW_{d}, CTW_{nd}) such when due to this comparison the local device time (LDT) approaches the contact time window (CTW_{d}, CTW_{nd}) that
- in the case of step **a1**) the wireless transmitter (WTM) is shut down in a shutdown process (SDP) and
- in the case of step **a2**) the wireless transmitter (WTM) is switched on in a switch-on process (SOP).

2. Method according to claim 1, **characterized in that** the shutdown process (SDP) includes
- sending (snd) a shutdown command (SDC_{ctg}), in particular cryptographically-signed, to the wireless transmitter (WTM),
- recording (rcd) a successful shutdown action (SSDA),
- signing (sgn) the shutdown action (SSDA) with a certificate (CTF), in particular a Trusted Platform Module (TPM) generated certificate (CTF_{TPM}),
- storing (sto) the certificate-signed shutdown action and the transmission disturbing contact time window (CTW_{d}) locally or in a distributed ledger (DTL) for a validation process (VLP) and/or an audit process (ADP).

3. Method according to claim 1, **characterized in that** the switch-on process (SOP) includes
- sending (snd) a switch-on command (SOC_{ctg}), in particular cryptographically-signed, to the wireless transmitter (WTM),
- recording (rcd) a successful switch-on action (SSOA),
- signing (sgn) the switch-on action with a certificate (CTF), in particular a Trusted Platform Module (TPM) generated certificate (CTF_{TPM}),
- storing (sto) the certificate-signed switch-on action and the transmission non-disturbing contact time window (CTW_{nd}) locally or in a distributed ledger (DTL) for a validation process (VLP) and/or an audit process (ADP).

4. Method according to claim 2 or 3, **characterized in that** the validation process (VLP) and/or the audit process (ADP) is carried out by a local or international regulatory agency (RLA) for intermittent mobile radio communication or by a licensed third party (LTP) such that the agency (RLA) or the party (LTP)
- requests (req) the records of the actions (SSDA, SSOA), the certificate-signed actions and the calculated contact time window (CTW_{d}, CTW_{nd}) , either being locally stored or from the distributed ledger (DTL), as well as the base station location data (BSLD), the mobile radio system data (MRSD, SSD) and the mobile radio detection data (MRDD, SOD),
- calculates (ccl) based on the localization data (LZD), the mobile radio system data (MRSD, SSD) and mobile radio detection data (MRDD, SOD) a validation process and/or the audit process-related contact time window (CTW_{VLP,ADP}),
- compares (cpr) the requested contact time window (CTW_{d}, CTW_{nd}) with the validation process and/or the audit process-related contact time window (CTW_{VLP,ADP}).

5. Method according to claim 4, **characterized in that**
the regulatory agency (RLA) or the third party (LTP) based on the calculated the validation process and/or the audit process-related contact time window (CTW_{VLP,ADP}) triggers the shutdown process (SDP) and the switch-on process (SOP) of the wireless transmitter (WTM).

6. Method according to one of the claims 1 to 5, **characterized in that**
the mobile radio detection data (MRDD, SOD) are sensor data generated by a radar or a camera detecting mobile transmitting devices of the intermittent mobile radio system (IMRS, SS) .

7. Method according to one of the claims 1 to 5, **characterized in that**
the mobile radio detection data (MRDD, SOD) are trajectory descriptive data relating to trajectories of mobile transmitting devices, such as Unmanned Aerial Vehicles (UAVs),Automated Guides Vehicles (AGVs), cars, trucks, planes etc., of the intermittent mobile radio system (IMRS, SS).

8. Method according to one of the claims 1 to 5, **characterized in that**
the intermittent mobile radio system (IMRS, SS) is a satellite system (SS) working on an Earth exploration satellite service (EESS) and providing satellite system data (SSD) as the mobile radio system data (MRSD, SSD) and satellite orbit data (SOD) as the mobile radio detection data (MRDD, SOD).

9. Gadget (GDG) for enabling a time-duplex, shared frequency-band operation (OPT_{td,sfb}) of an intermittent mobile radio system (IMRS, SS) and a wireless communication system (WCS), by which at a base station (BS) or an access point (AP) of the wireless communication system (WCS) with each a wireless transmitter (WTM) for the wireless communication following input data (IPD) are available
- localization data representing the location of the base station or access point (LZD),
- mobile radio system data (MRSD, SSD),
- mobile radio detection data (MRDD, SOD),
**characterized by**:
- a central processing unit (CPU) including a non-volatile, processor-readable storage medium (STM) having processor-readable program-instructions of a program module (PGM) for enabling the time-duplex, shared frequency-band operation stored in the non-transitory, processor-readable storage medium (STM) and a processor (PRC) connected with the storage medium (STM) executing the processor-readable program-instructions of the program module (PGM) to enable the time-duplex, shared frequency-band operation,
- a control interface (CIF) via which the wireless transmitter (WTM) is controlled,
- a localization information interface (LLIF) via which the localization data (LZD) are received,
- a mobile radio system interface (MRSIF) via which the mobile radio system data (MRSD, SSD) are received,
- a mobil radio detection interface (MRDIF) via which the mobile radio detection data (MRDD, SOD) are received and
- a data storage medium (DSM) to store inter alia the input data (IPD, LZD, MRSD, SSD, MRDD, SOD), wherein
the central processing unit (CPU) is connected with the interfaces (CIF, LLIF, MRSIF, MRDIF) and the data storage medium (DSM) thereby forming a functional unit which is designed such that
**a**) based on the input data (IPD, LZD, MRSD, SSD, MRDD, SOD) it is calculated (clt)
**a1**) a disturbed contact time window (CTW_{d}) for which the intermittent mobile radio system (IMRS) regarding the time-duplex, shared frequency-band operation (OPT_{td,sfb}) is disturbed by transmissions of the wireless communication system (WCS) in the shared frequency-band, or
**a2**) a non-disturbed contact time window (CTW_{nd}) for which the intermittent mobile radio system (IMRS) regarding the time-duplex, shared frequency-band operation (OPT_{td,sfb}) is not disturbed by transmissions of the wireless communication system (WCS) in the shared frequency-band,
**b**) a local device time (LDT) of the base station or access point is compared (cmp) with the calculated contact time window (CTW_{d}, CTW_{nd}) such when due to this comparison the local device time (LDT) approaches the contact time window (CTW_{d}, CTW_{nd}) that
- in the case of step **a1**) the wireless transmitter (WTM) is shut down via the control interface (CIF) in a shutdown process (SDP) and
- in the case of step **a2**) the wireless transmitter (WTM) is switched on via the control interface (CIF) in a switch-on process (SOP).

10. Gadget (GDG) according to claim 9, **characterized in that** the functional unit formed by the central processing unit (CPU) being connected with the interfaces (CIF, LLIF, MRSIF, MRDIF) and the data storage medium (DSM) is designed such that
according to the shutdown process (SDP)
- a shutdown command (SDC_{ctg}), in particular cryptographically-signed, is sent (snd) via the control interface (CIF) to the wireless transmitter (WTM),
- a successful shutdown action (SSDA) is recorded (rcd),
- the shutdown action is signed (sgn) with a certificate (CTF), in particular a Trusted Platform Module (TPM) generated certificate (CTF_{TPM}),
- the certificate-signed shutdown action and the transmission disturbing contact time window (CTW_{d}) are stored (sto) locally in the data storage medium (DSM) or via a storing interface (STIF) included in the formed functional unit in a distributed ledger (DTL) for a validation process (VLP) and/or an audit process (ADP).

11. Gadget (GDG) according to claim 9, **characterized in that** the functional unit formed by the central processing unit (CPU) being connected with the interfaces (CIF, LLIF, MRSIF, MRDIF) and the data storage medium (DSM) is designed such that
according to the switch-on process (SOP)
- a switch-on command (SOC_{ctg}), in particular cryptographically-signed, is sent (snd) via the control interface (CIF) to the wireless transmitter (WTM),
- a successful switch-on action (SSOA) is recorded (rcd),
- the switch-on action is signed (sgn) with a certificate (CTF), in particular a Trusted Platform Module (TPM) generated certificate (CTF_{TPM}),
- the certificate-signed switch-on action and the transmission non-disturbing contact time window (CTW_{nd}) are stored (sto) locally in the data storage medium (DSM) or via a storing interface (STIF) included in the formed functional unit in a distributed ledger (DTL) for a validation process (VLP) and/or an audit process (ADP).

12. Gadget (GDG) according to claim 10 or 11, **characterized by**
an external interface (EXIF), which to supplement the functional unit and in addition to the other interfaces (CIF, LLIF, MRSIF, MRDIF) is connected to the central processing unit (CPU), wherein the functional unit formed as such is connectable via the external interface (EXIF) to a local or international regulatory agency (RLA) or to a licensed third party (LTP) so that the validation process (VLP) and/or the audit process (ADP) is carried out by the regulatory agency (RLA) or the licensed third party (LTP) in a way that as a result of requesting (req) by the agency (RLA) or the party (LTP) the records of the actions (SSDA, SSOA), the certificate-signed actions and the calculated contact time window (CTW_{d}, CTW_{nd}) , either being locally stored or from the distributed ledger (DTL), as well as the localization data (LZD), the mobile radio system data (MRSD, SSD) and the mobile radio detection data (MRDD, SOD) are transmitted via the external interface (EXIF) to the agency (RLA) or the party (LTP) so that
the regulatory agency (RLA) or the third party (LTP) is able (**i**) to calculate (ccl) based on the localization data (LZD), the mobile radio system data (MRSD, SSD) and mobile radio detection data (MRDD, SOD) a validation process and/or the audit process-related contact time window (CTW_{VLP,ADP}) and (ii) to compare (cpr) the requested contact time window (CTW_{d}, CTW_{nd}) with the validation process and/or the audit process-related contact time window (CTW_{VLP,ADP}).

13. Gadget (GDG) according to claim 12, **characterized in that** the functional unit supplementally formed by the external interface (EXIF) and connected to the central processing unit (CPU) is connectable via the external interface (EXIF) to the regulatory agency (RLA) or the third party (LTP) so that the regulatory agency (RLA) or the third party (LTP) is able based on the calculated the validation process and/or the audit process-related contact time window (CTW_{VLP,ADP}) to trigger via the external interface (EXIF) the shutdown process (SDP) and the switch-on process (SOP) of the wireless transmitter (WTM).

14. Gadget (GDG) according to one of the claims 9 to 13, **characterized in that**
the mobile radio detection data (MRDD, SOD) are sensor data generated by a radar or a camera detecting mobile transmitting devices of the intermittent mobile radio system (IMRS, SS) .

15. Gadget (GDG) according to one of the claims 9 to 14, **characterized in that**
the mobile radio detection data (MRDD, SOD) are trajectory descriptive data relating to trajectories of mobile transmitting devices, such as Unmanned Aerial Vehicles (UAVs),Automated Guides Vehicles (AGVs), cars, trucks, planes etc., of the intermittent mobile radio system (IMRS, SS).

16. Gadget (GDG) according to one of the claims 9 to 15, **characterized in that**
the intermittent mobile radio system (IMRS, SS) is a satellite system working on an Earth exploration satellite service (EESS) and providing satellite system data (SSD) as the mobile radio system data (MRSD, SSD) and satellite orbit data (SOD) as the mobile radio detection data (MRDD, SOD).

17. Gadget (GDG) according to one of the claims 9 to 16, **characterized in that**
the gadget (GDG) is part of the base station (BS) or the access point (AP).

## Patentansprüche

1. Verfahren zum Ermöglichen eines Zeit-Duplex-, gemeinsamen Frequenzbandbetriebs (OPT_{td}, _{sfb}) eines intermittierenden Mobilfunksystems (IMRS, SS) und eines drahtlosen Kommunikationssystems (WCS), bei dem an einer Basisstation (BS) oder einem Zugangspunkt (AP) des drahtlosen Kommunikationssystems (WCS) mit jeweils einem drahtlosen Sender (WTM) für die drahtlose Kommunikation folgende Eingangsdaten (IPD) verfügbar sind:
- Lokalisierungsdaten, die den Standort der Basisstation oder des Zugangspunkts (LZD) darstellen,
- Mobilfunksystemdaten (MRSD, SSD),
- Mobilfunkerkennungsdaten (MRDD, SOD),
**gekennzeichnet durch**:
**a**) Berechnen (clt) basierend auf den Eingangsdaten (IPD, LZD, MRSD, SSD, MRDD, SOD)
**a1**) eines gestörten Kontaktzeitfensters (CTW_{d}), während dessen das intermittierende Mobilfunksystem (IMRS, SS) hinsichtlich des Zeitduplex-, gemeinsamen Frequenzbandbetriebs (OPT_{td}, _{sfb}) durch Übertragungen des drahtlosen Kommunikationssystems (WCS) im gemeinsamen Frequenzband gestört ist, oder
**a2**) eines nichtgestörten Kontaktzeitfensters (CTW_{nd}), während dessen das intermittierende Mobilfunksystem (IMRS, SS) hinsichtlich des Zeitduplex, gemeinsamen Frequenzbandbetriebs (OPT_{td}, _{sfb}) durch Übertragungen des drahtlosen Kommunikationssystems (WCS) im gemeinsamen Frequenzband nicht gestört ist,
**b**) Vergleichen (cmp) einer lokalen Vorrichtungszeit (LDT) der Basisstation oder des Zugangspunkts mit dem berechneten Kontaktzeitfenster (CTW_{d}, CTW_{nd}), wenn sich die lokale Vorrichtungszeit (LDT) aufgrund dieses Vergleichs dem Kontaktzeitfenster (CTW_{d}, CTW_{nd}) so nähert, dass
- im Falle des Schrittes **a1**) der drahtlose Sender (WTM) in einem Abschaltprozess (SDP) abgeschaltet wird und
- im Falle des Schrittes **a2**) der drahtlose Sender (WTM) in einem Einschaltprozess (SOP) eingeschaltet wird.

2. Verfahren nach Anspruch 1, **dadurch gekennzeichnet, dass** der Abschaltprozess (SDP) beinhaltet:
- Senden (snd) eines insbesondere kryptografisch signierten Abschaltbefehls (SDC_{ctg}) an den drahtlosen Sender (WTM),
- Aufzeichnen (rcd) eines erfolgreichen Abschaltvorgangs (SSDA),
- Signieren (sgn) des Abschaltvorgangs (SSDA) mit einem Zertifikat (CTF), insbesondere einem durch ein Trusted Platform Module (TPM) generierten Zertifikat (CTF_{TPM}),
- Speichern (sto) des zertifikatsignierten Abschaltvorgangs und des die Übertragung störenden Kontaktzeitfensters (CTW_{d}) lokal oder in einem verteilten Ledger (DTL) für einen Validierungsprozess (VLP) und/oder einen Prüfprozess (ADP).

3. Verfahren nach Anspruch 1, **dadurch gekennzeichnet, dass** der Einschaltprozess (SOP) beinhaltet:
- Senden (snd) eines insbesondere kryptografisch signierten Einschaltbefehls (SOC_{ctg}) an den drahtlosen (WTM),
- Aufzeichnen (rcd) eines erfolgreichen Einschaltvorgangs (SSOA),
- Signieren (sgn) des Einschaltvorgangs mit einem Zertifikat (CTF), insbesondere einem durch ein Trusted Platform Module (TPM) generierten Zertifikat (CTF_{TPM}),
- Speichern (sto) des zertifikatsignierten Einschaltvorgangs und des die Übertragung nicht störenden Kontaktzeitfensters (CTW_{nd}) lokal oder in einem verteilten Ledger (DTL) für einen Validierungsprozess (VLP) und/oder einen Prüfprozess (ADP).

4. Verfahren nach Anspruch 2 oder 3, **dadurch gekennzeichnet, dass** der Validierungsprozess (VLP) und/oder der Prüfprozess (ADP) durch eine lokale oder internationale Aufsichtsbehörde (RLA) für intermittierende Mobilfunkkommunikation oder durch eine lizenzierte Drittpartei (LTP) durchgeführt wird, sodass die Behörde (RLA) oder die Partei (LTP)
- die Aufzeichnungen der Vorgänge (SSDA, SSOA), der zertifikatsignierten Vorgänge und des berechneten Kontaktzeitfensters (CTW_{d}, CTW_{nd}), die entweder lokal gespeichert sind oder aus dem verteilten Ledger (DTL) stammen, sowie die Standortdaten der Basisstation (BSLD), die Daten des Mobilfunksystems (MRSD, SSD) und die Daten der Mobilfunkerkennung (MRDD, SOD) anfordert (req),
- basierend auf den Lokalisierungsdaten (LZD), den Mobilfunksystemdaten (MRSD, SSD) und den Mobilfunkerkennungsdaten (MRDD, SOD) einen Validierungsprozess und/oder das prüfprozessbezogene Kontaktzeitfenster (CTW_{VLP,ADP}) berechnet (ccl),
- das angeforderte Kontaktzeitfenster (CTW_{d}, CTW_{nd}) mit dem Validierungsprozess und/oder dem auf den Prüfprozess bezogenen Kontaktzeitfenster (CTW_{VLP,ADP}) vergleicht (cpr) .

5. Verfahren nach Anspruch 4, **dadurch gekennzeichnet, dass** die Aufsichtsbehörde (RLA) oder die Drittpartei (LTP) basierend auf dem berechneten Validierungsprozesses und/oder dem prüfprozessbezogenen Kontaktzeitfenster (CTW_{VLP, ADP}) den Abschaltprozess (SDP) und den Einschaltprozess (SOP) des drahtlosen Senders (WTM) auslöst.

6. Verfahren nach einem der Ansprüche 1 bis 5, **gekennzeichnet dadurch, dass**
die Mobilfunkerkennungsdaten (MRDD, SOD) Sensordaten sind, die durch einen Radar oder eine Kamera erzeugt werden, die mobile Sendevorrichtungen des intermittierenden Mobilfunksystems (IMRS, SS) erkennen.

7. Verfahren nach einem der Ansprüche 1 bis 5, **gekennzeichnet dadurch, dass**
die Mobilfunkerkennungsdaten (MRDD, SOD) Flugbahnbeschreibungsdaten sind, die sich auf Flugbahnen mobiler Sendevorrichtungen, wie etwa unbemannte Luftfahrzeuge (UAV), automatisierte Führungsfahrzeuge (AGV), Autos, Lastwagen, Flugzeuge usw.,
des intermittierenden Mobilfunksystems (IMRS, SS) beziehen.

8. Verfahren nach einem der Ansprüche 1 bis 5, **gekennzeichnet dadurch, dass**
das intermittierende Mobilfunksystem (IMRS, SS) ein Satellitensystem (SS) ist, das an einem Erderkundungssatellitendienst (EESS) arbeitet und Satellitensystemdaten (SSD) als Mobilfunksystemdaten (MRSD, SSD) und Satellitenorbitdaten (SOD) als Mobilfunkerkennungsdaten (MRDD, SOD) bereitstellt.

9. Gerät (GDG) zum Ermöglichen eines Zeit-Duplex-, gemeinsamen Frequenzbandbetriebs (OPT_{td, sfb}) eines intermittierenden Mobilfunksystems (IMRS, SS) und eines drahtlosen Kommunikationssystems (WCS), bei dem an einer Basisstation (BS) oder einem Zugangspunkt (AP) des drahtlosen Kommunikationssystems (WCS) mit jeweils einem drahtlosen Sender (WTM) für die drahtlose Kommunikation folgende Eingangsdaten (IPD) verfügbar sind:
- Lokalisierungsdaten, die den Standort der Basisstation oder des Zugangspunkts (LZD) darstellen,
- Mobilfunksystemdaten (MRSD, SSD),
- Mobilfunkerkennungsdaten (MRDD, SOD),
**gekennzeichnet durch**:
- eine zentrale Verarbeitungseinheit (CPU) mit einem nichtflüchtigen, prozessorlesbaren Speichermedium (STM), das prozessorlesbare Programmanweisungen eines Programmmoduls (PGM) zum Ermöglichen des Zeit-Duplex-, gemeinsamen Frequenzbandbetriebs aufweist, die in dem nichtflüchtigen, prozessorlesbaren Speichermedium (STM) gespeichert sind, und einen Prozessor (PRC), der mit dem Speichermedium (STM) verbunden ist und die prozessorlesbaren Programmanweisungen des Programmmoduls (PGM) ausführt, um den Zeit-Duplex-, gemeinsamen Frequenzbandbetrieb zu ermöglichen,
- eine Steuerschnittstelle (CIF), über die der drahtlose Sender (WTM) gesteuert wird,
- eine Lokalisierungsinformationsschnittstelle (LLIF), über welche die Lokalisierungsdaten (LZD) empfangen werden,
- eine Mobilfunksystemschnittstelle (MRSIF), über welche die Mobilfunksystemdaten (MRSD, SSD) empfangen werden,
- eine Mobilfunkerkennungsschnittstelle (MRDIF), über welche die Mobilfunk-Erkennungsdaten (MRDD, SOD) empfangen werden, und
- ein Datenspeichermedium (DSM) zum Speichern unter anderem der Eingangsdaten (IPD, LZD, MRSD, SSD, MRDD, SOD), wobei die zentrale Verarbeitungseinheit (CPU) mit den Schnittstellen (CIF, LLIF, MRSIF, MRDIF) und dem Datenträger (DSM) verbunden ist und so eine Funktionseinheit bildet, die ausgelegt ist, sodass
a) basierend auf den Eingangsdaten (IPD, LZD, MRSD, SSD, MRDD, SOD) Folgendes berechnet (clt) wird:
**a1**) ein gestörtes Kontaktzeitfenster (CTW_{d}), während dessen das intermittierende Mobilfunksystem (IMRS) hinsichtlich des Zeitduplex-, gemeinsamen Frequenzbandbetriebs (OPT_{td}, _{sfb}) durch Übertragungen des drahtlosen Kommunikationssystems (WCS) im gemeinsamen Frequenzband gestört ist, oder
**a2**) ein nichtgestörtes Kontaktzeitfenster (CTW_{nd}), während dessen das intermittierende Mobilfunksystem (IMRS) hinsichtlich des Zeitduplex, gemeinsamen Frequenzbandbetriebs (OPT_{td}, _{sfb}) durch Übertragungen des drahtlosen Kommunikationssystems (WCS) im gemeinsamen Frequenzband nicht gestört ist,
**b**) eine lokale Vorrichtungszeit (LDT) der Basisstation oder des Zugangspunkts mit dem berechneten Kontaktzeitfenster (CTW_{d}, CTW_{nd}) verglichen (cmp) wird, wenn sich die lokale Vorrichtungszeit (LDT) aufgrund dieses Vergleichs dem Kontaktzeitfenster (CTW_{d}, CTW_{nd}) so nähert, dass
- im Falle des Schrittes **a1**) der drahtlose Sender (WTM) in einem Abschaltprozess (SDP) über die Steuerschnittfläche (CIF) abgeschaltet wird und
- im Falle des Schrittes **a2**) der drahtlose (WTM) in einem Einschaltprozess (SOP) über die Steuerschnittfläche (CIF) eingeschaltet wird.

10. Gerät (GDG) nach Anspruch 9, **dadurch gekennzeichnet, dass** die Funktionseinheit, die durch die zentrale Verarbeitungseinheit (CPU) gebildet wird, die mit den Schnittstellen (CIF, LLIF, MRSIF, MRDIF) und dem Datenspeichermedium (DSM) verbunden ist, ausgebildet ist, sodass
gemäß dem Abschaltprozess (SDP)
- ein insbesondere kryptografisch signierter Abschaltbefehl (SDC_{ctg}) über die Steuerschnittfläche (CIF) an den drahtlosen Sender (WTM) gesendet (snd) wird,
- ein erfolgreicher Abschaltvorgang (SSDA) aufgezeichnet (rcd) wird,
- der Abschaltvorgang mit einem Zertifikat (CTF) signiert (sgn) wird, insbesondere einem durch ein Trusted Platform Module (TPM) generierten Zertifikat (CTF_{TPM}),
- der zertifikatsignierte Abschaltvorgang und das die Übertragung störende Kontaktzeitfenster (CTW_{d}) lokal in dem Datenspeichermedium (DSM) gespeichert (sto) werden oder über eine in der gebildeten Funktionseinheit beinhaltete Speicherschnittstelle (STIF) in einem verteilten Ledger (DTL) für einen Validierungsprozess (VLP) und/oder einen Prüfprozess (ADP) gespeichert (sto) werden.

11. Gerät (GDG) nach Anspruch 9, **dadurch gekennzeichnet, dass** die Funktionseinheit, die durch die zentrale Verarbeitungseinheit (CPU) gebildet wird, die mit den Schnittstellen (CIF, LLIF, MRSIF, MRDIF) und dem Datenspeichermedium (DSM) verbunden ist, ausgebildet ist, sodass
gemäß dem Einschaltprozess (SOP)
- ein insbesondere kryptografisch signierter Einschaltbefehl (SOC_{ctg}) über die Steuerschnittfläche (CIF) an den drahtlosen Sender (WTM) gesendet (snd) wird,
- ein erfolgreicher Einschaltvorgang (SSOA) aufgezeichnet (rcd) wird,
- der Einschaltvorgang mit einem Zertifikat (CTF) signiert (sgn) wird, insbesondere einem durch ein Trusted Platform Module (TPM) generierten Zertifikat (CTF_{TPM}),
- der zertifikatsignierte Einschaltvorgang und das die Übertragung nicht störende Kontaktzeitfenster (CTW_{nd}) lokal in dem Datenspeichermedium (DSM) oder über eine in der gebildeten Funktionseinheit beinhaltete Speicherschnittstelle (STIF) in einem verteilten Ledger (DTL) für einen Validierungsprozess (VLP) und/oder einen Prüfprozess (ADP) gespeichert (sto) werden.

12. Gerät (GDG) nach Anspruch 10 oder 11, **gekennzeichnet durch** eine externe Schnittstelle (EXIF), die zum Ergänzen der Funktionseinheit und zusätzlich zu den anderen Schnittstellen (CIF, LLIF, MRSIF, MRDIF) mit der zentralen Verarbeitungseinheit (CPU) verbunden ist, wobei die so gebildete Funktionseinheit über die externe Schnittstelle (EXIF) mit einer lokalen oder internationalen Aufsichtsbehörde (RLA) oder einer lizenzierten Drittpartei (LTP) verbindbar ist, sodass der Validierungsprozess (VLP) und/oder der Prüfprozess (ADP) durch die Aufsichtsbehörde (RLA) oder die lizenzierte Drittpartei (LTP) so durchgeführt wird, dass als Ergebnis einer Anforderung (req) durch die Behörde (RLA) oder die Drittpartei (LTP) die Aufzeichnungen der Vorgänge (SSDA, SSOA), die zertifikatssignierten Vorgänge und das berechnete Kontaktzeitfenster (CTW_{d}, CTW_{nd}), die entweder lokal gespeichert sind oder aus dem verteilten Ledger (DTL) stammen, sowie die Lokalisierungsdaten (LZD), die Mobilfunksystemdaten (MRSD, SSD) und die Mobilfunkerkennungsdaten (MRDD, SOD) über die externe Schnittstelle (EXIF) an die Behörde (RLA) oder die Partei (LTP) übertragen werden, sodass
die Aufsichtsbehörde (RLA) oder die Drittpartei (LTP) in der Lage ist, (**i**) basierend auf den Lokalisierungsdaten (LZD), den Mobilfunksystemdaten (MRSD, SSD) und den Mobilfunkerkennungsdaten (MRDD, SOD) ein auf den Validierungsprozess und/oder den Prüfprozess bezogenes Kontaktzeitfenster (CTW_{VLP,ADP}) zu berechnen (ccl) und (ii) das angeforderte Kontaktzeitfenster (CTW_{d}, CTW_{nd}) mit dem Validierungsprozess und/oder dem auf den Prüfprozess bezogenen Kontaktzeitfenster (CTW_{VLP,ADP}) zu vergleichen (cpr).

13. Gerät (GDG) nach Anspruch 12, **dadurch gekennzeichnet, dass** die durch die externe Schnittstelle (EXIF) ergänzend gebildete und mit der Zentraleinheit (CPU) verbundene Funktionseinheit über die externe Schnittstelle (EXIF) mit der Aufsichtsbehörde (RLA) oder der Drittpartei (LTP) verbindbar ist, sodass die Aufsichtsbehörde (RLA) oder die Drittpartei (LTP) in der Lage ist, basierend auf dem berechneten Validierungsprozesses und/oder dem prüfprozessbezogenen Kontaktzeitfenster (CTW_{VLP}, _{ADP}) über die externe Schnittstelle (EXIF) den Abschaltprozess (SDP) und den Einschaltprozess (SOP) des drahtlosen Senders (WTM) auszulösen.

14. Gerät (GDG) nach einem der Ansprüche 9 bis 13,
**gekennzeichnet dadurch, dass**
die Mobilfunkerkennungsdaten (MRDD, SOD) Sensordaten sind, die durch einen Radar oder eine Kamera erzeugt werden, die mobile Sendevorrichtungen des intermittierenden Mobilfunksystems (IMRS, SS) erkennen.

15. Gerät (GDG) nach einem der Ansprüche 9 bis 14, **gekennzeichnet dadurch, dass**
die Mobilfunkerkennungsdaten (MRDD, SOD) Flugbahnbeschreibungsdaten sind, die sich auf Flugbahnen mobiler Sendevorrichtungen, wie etwa unbemannte Luftfahrzeuge (UAVs), automatisierte Führungsfahrzeuge (AGVs), Autos, Lastwagen, Flugzeuge usw.,
des intermittierenden Mobilfunksystems (IMRS, SS) beziehen.

16. Gerät (GDG) nach einem der Ansprüche 9 bis 15, **gekennzeichnet dadurch, dass**
das intermittierende Mobilfunksystem (IMRS, SS) ein Satellitensystem ist, das an einem Erderkundungssatellitendienst (EESS) arbeitet und Satellitensystemdaten (SSD) als Mobilfunksystemdaten (MRSD, SSD) und Satellitenorbitdaten (SOD) als Mobilfunkerkennungsdaten (MRDD, SOD) bereitstellt.

17. Gerät (GDG) nach einem der Ansprüche 9 bis 16, **gekennzeichnet dadurch, dass**
das Gerät (GDG) Teil der Basisstation (BS) oder des Zugangspunkts (AP) ist.

## Revendications

1. Procédé d'activation d'une opération de bande de fréquences partagée de duplexage temporel (OPT_{td,sfb}) d'un système radio mobile intermittent (IMRS, SS) et d'un système de communication sans fil (WCS), par lequel au niveau d'une station de base (BS) ou d'un point d'accès (AP) du système de communication sans fil (WCS) avec chaque émetteur sans fil (WTM) pour la communication sans fil, les données en entrée suivantes (IPD) sont disponibles
- des données de localisation représentant l'emplacement de la station de base ou du point d'accès (LZD),
- des données de système radio mobiles (MRSD, SSD),
- des données de détection radio mobiles (MRDD, SOD), **caractérisé par** :
a) le calcul (clt) en fonction des données en entrée (IPD, LZD, MRSD, SSD, MRDD, SOD) de
a1) une fenêtre temporelle de contact perturbée (CTW_{d}) pour laquelle le système radio mobile intermittent (IMRS, SS) concernant l'opération de bande de fréquences partagée de duplexage temporel (OPT_{td,sfb}) est perturbé par des transmissions du système de communication sans fil (WCS) dans la bande de fréquences partagée, ou
a2) une fenêtre temporelle de contact non perturbée (CTW_{nd}) pour laquelle le système radio mobile intermittent (IMRS, SS) concernant l'opération de bande de fréquences partagée de duplexage temporel (OPT_{td,sfb}) n'est pas perturbé par des transmissions du système de communication sans fil (WCS) dans la bande de fréquences partagée,
b) la comparaison (cmp) d'une heure locale de dispositif (LDT) de la station de base ou du point d'accès à la fenêtre temporelle de contact calculée (CTW_{d}, CTW_{nd}) de sorte que, lorsque du fait de cette comparaison, l'heure locale de dispositif (LDT) s'approche de la fenêtre temporelle de contact (CTW_{d}, CTW_{nd})
- dans le cas de l'étape a1) l'émetteur sans fil (WTM) est mis à l'arrêt au cours d'un procédé d'arrêt (SDP) et
- dans le cas de l'étape a2) l'émetteur sans fil (WTM) est mis en marche au cours d'un procédé de mise en marche (SOP).

2. Procédé selon la revendication 1, **caractérisé en ce que** le procédé d'arrêt (SDP) comprend
- l'envoi (snd) d'une commande d'arrêt (SDC_{ctg}), plus particulièrement signée cryptographiquement, à l'émetteur sans fil (WTM),
- l'enregistrement (rcd) d'une action d'arrêt réussie (SSDA),
- la signature (sgn) de l'action d'arrêt (SSDA) avec un certificat (CTF), plus particulièrement un certificat généré (CTF_{TPM}) par un module de plateforme de confiance (TPM),
- la conservation en mémoire (sto) de l'action d'arrêt signée par un certificat et de la fenêtre temporelle de contact perturbant la transmission (CTW_{d}) localement ou dans un registre distribué (DTL) pour un procédé de validation (VLP) et/ou un procédé d'audit (ADP).

3. Procédé selon la revendication 1, **caractérisé en ce que** le procédé de mise en marche (SOP) comprend
- l'envoi (snd) d'une commande de mise en marche (SOC_{ctg}), plus particulièrement signée cryptographiquement, à l'émetteur sans fil (WTM),
- l'enregistrement (rcd) d'une action de mise en marche réussie (SSOA),
- la signature (sgn) de l'action de mise en marche avec un certificat (CTF), plus particulièrement un certificat généré (CTF_{TPM}) par un module de plateforme de confiance (TPM),
- la conservation en mémoire (sto) de l'action de mise en marche signée par un certificat et de la fenêtre temporelle de contact ne perturbant pas la transmission (CTW_{nd}) localement ou dans un registre distribué (DTL) pour un procédé de validation (VLP) et/ou un procédé d'audit (ADP).

4. Procédé selon la revendication 2 ou 3, **caractérisé en ce que** le procédé de validation (VLP) et/ou le procédé d'audit (ADP) est exécuté par une agence de régulation (RLA) locale ou internationale pour une communication radio mobile intermittente ou par une partie tierce avec licence (LTP) de sorte que l'agence (RLA) ou la partie tierce (LTP)
- demande (req) les enregistrements des actions (SSDA, SSOA), les actions signées par un certificat et la fenêtre temporelle de contact calculée (CTW_{d}, CTW_{nd}), soit qui sont conservés en mémoire localement ou à partir du registre distribué (DTL), ainsi que les données d'emplacement de station de base (BSLD), les données de système radio mobiles (MRSD, SSD) et les données de détection radio mobiles (MRDD, SOD),
- calcule (ccl) en fonction des données de localisation (LZD), des données de système radio mobiles (MRSD, SSD) et des données de détection radio mobiles (MRDD, SOD) un procédé de validation et/ou la fenêtre temporelle de contact relative au procédé d'audit (CTW_{VLP,ADP})
- compare (cpr) la fenêtre temporelle de contact demandée (CTW_{d}, CTW_{nd}) au procédé de validation et/ou à la fenêtre temporelle de contact relative au procédé d'audit (CTW_{VLP,ADP}).

5. Procédé selon la revendication 4, **caractérisé en ce que** l'agence de régulation (RLA) ou la partie tierce (LTP) en fonction du procédé de validation calculé et/ou de la fenêtre temporelle de contact relative au procédé d'audit (CTW_{VLP,ADP}) déclenche le procédé d'arrêt (SDP) et le procédé de mise en marche (SOP) de l'émetteur sans fil (WTM).

6. Procédé selon l'une quelconque des revendications 1 à 5, **caractérisé en ce que**
les données de détection radio mobiles (MRDD, SOD) sont des données de capteur générées par un radar ou un appareil de prise de vues détectant des dispositifs de transmission mobiles du système radio mobile intermittent (IMRS, SS).

7. Procédé selon l'une quelconque des revendications 1 à 5, **caractérisé en ce que**
les données de détection radio mobiles (MRDD, SOD) sont des données descriptives de trajectoire relatives à des trajectoires de dispositifs de transmission mobiles, tels que des véhicules aériens sans pilote (UAV), des véhicules à guidage automatisé (AGV), des voitures, des camions, des avions, etc. du système radio mobile intermittent (IMRS, SS).

8. Procédé selon l'une quelconque des revendications 1 à 5, **caractérisé en ce que**
le système radio mobile intermittent (IMRS, SS) est un système à satellites (SS) fonctionnant sur un service d'exploration de la Terre par satellite (EESS) et fournissant des données de système à satellites (SSD) sous la forme des données de système radio mobiles (MRSD, SSD) et des données d'orbite de satellite (SOD) sous la forme des données de détection radio mobiles (MRDD, SOD) .

9. Gadget (GDG) d'activation d'une opération de bande de fréquences partagée de duplexage temporel (OPT_{td,sfb}) d'un système radio mobile intermittent (IMRS, SS) et d'un système de communication sans fil (WCS), par lequel au niveau d'une station de base (BS) ou d'un point d'accès (AP) du système de communication sans fil (WCS) avec chaque émetteur sans fil (WTM) pour la communication sans fil, les données en entrée suivantes (IPD) sont disponibles
- des données de localisation représentant l'emplacement de la station de base ou du point d'accès (LZD),
- des données de système radio mobiles (MRSD, SSD),
- des données de détection radio mobiles (MRDD, SOD),
**caractérisé par** :
- une unité de traitement centrale (CPU) comprenant un support à mémoire (STM) lisible par un processeur non volatile possédant des instructions de programme lisibles par un processeur d'un module de programme (PGM) destinées à l'activation de l'opération de bande de fréquences partagée de duplexage temporel conservées en mémoire dans le support à mémoire (STM) lisible par un processeur non transitoire et un processeur (PRC) raccordé au support à mémoire (STM) qui exécute les instructions de programme lisibles par un processeur du module de programme (PGM) de façon à activer l'opération de bande de fréquences partagée de duplexage temporel,
- une interface de commande (CIF) par l'intermédiaire de laquelle l'émetteur sans fil (WTM) est commandé,
- une interface d'informations de localisation (LLIF) par l'intermédiaire de laquelle les données de localisation (LZD) sont reçues,
- une interface de système radio mobile (MRSIF) par l'intermédiaire de laquelle les données de système radio mobiles (MRSD, SSD) sont reçues,
- une interface de détection radio mobile (MRDIF) par l'intermédiaire de laquelle les données de détection radio mobiles (MRDD, SOD) sont reçues et
- un support à mémoire de données (DSM) destiné à la conservation en mémoire entre autres des données en entrée (IPD, LZD, MRSD, SSD, MRDD, SOD), l'unité de traitement centrale (CPU) étant raccordée aux interfaces (CIF, LLIF, MRSIF, MRDIF) et au support à mémoire de données (DSM), formant ainsi une unité fonctionnelle qui est conçue de sorte que
a) en fonction des données en entrée (IPD, LZD, MRSD, SSD, MRDD, SOD), il est calculé (clt)
a1) une fenêtre temporelle de contact perturbée (CTW_{d}) pour laquelle le système radio mobile intermittent (IMRS) concernant l'opération de bande de fréquences partagée de duplexage temporel (OPT_{td,sfb}) est perturbé par des transmissions du système de communication sans fil (WCS) dans la bande de fréquences partagée, ou
a2) une fenêtre temporelle de contact non perturbée (CTW_{nd}) pour laquelle le système radio mobile intermittent (IMRS) concernant l'opération de bande de fréquences partagée de duplexage temporel (OPT_{td,sfb}) n'est pas perturbé par des transmissions du système de communication sans fil (WCS) dans la bande de fréquences partagée,
b) une heure locale de dispositif (LDT) de la station de base ou du point d'accès est comparée (cmp) à la fenêtre temporelle de contact calculée (CTW_{d}, CTW_{nd}) de sorte que, lorsque du fait de cette comparaison, l'heure locale de dispositif (LDT) s'approche de la fenêtre temporelle de contact (CTW_{d}, CTW_{nd})
- dans le cas de l'étape a1) l'émetteur sans fil (WTM) est mis à l'arrêt par l'intermédiaire de l'interface de commande (CIF) au cours d'un procédé d'arrêt (SDP) et
- dans le cas de l'étape a2) l'émetteur sans fil (WTM) est mis en marche par l'intermédiaire de l'interface de commande (CIF) au cours d'un procédé de mise en marche (SOP).

10. Gadget (GDG) selon la revendication 9, **caractérisé en ce que** l'unité fonctionnelle formée par l'unité de traitement centrale (CPU) qui est raccordée aux interfaces (CIF, LLIF, MRSIF, MRDIF) et le support à mémoire de données (DSM) est conçue de sorte que
en fonction du procédé d'arrêt (SDP)
- une commande d'arrêt (SDC_{ctg}), plus particulièrement signée cryptographiquement, est envoyée (snd) par l'intermédiaire de l'interface de commande (CIF) à l'émetteur sans fil (WTM),
- une action d'arrêt réussie (SSDA) est enregistrée (rcd),
- l'action d'arrêt est signée (sgn) avec un certificat (CTF), plus particulièrement un certificat généré (CTF_{TPM}) par un module de plateforme de confiance (TPM),
- l'action d'arrêt signée par un certificat et la fenêtre temporelle de contact perturbant la transmission (CTW_{d}) sont conservées en mémoire (sto) localement dans le support à mémoire de données (DSM) ou par l'intermédiaire d'une interface de conservation en mémoire (STIF) incluse dans l'unité fonctionnelle formée dans un registre distribué (DTL) pour un procédé de validation (VLP) et/ou un procédé d'audit (ADP).

11. Gadget (GDG) selon la revendication 9, **caractérisé en ce que** l'unité fonctionnelle formée par l'unité de traitement centrale (CPU) qui est raccordée aux interfaces (CIF, LLIF, MRSIF, MRDIF) et le support à mémoire de données (DSM) est conçue de sorte que
en fonction du procédé de mise en marche (SOP)
- une commande de mise en marche (SOC_{ctg}), plus particulièrement signée cryptographiquement, est envoyée (snd) par l'intermédiaire de l'interface de commande (CIF) à l'émetteur sans fil (WTM),
- une action de mise en marche réussie (SSOA) est enregistrée (rcd),
- l'action de mise en marche est signée (sgn) avec un certificat (CTF), plus particulièrement un certificat généré (CTF_{TPM}) par un module de plateforme de confiance (TPM),
- l'action de mise en marche signée par un certificat et la fenêtre temporelle de contact ne perturbant pas la transmission (CTW_{nd}) sont conservées en mémoire (sto) localement dans le support à mémoire de données (DSM) ou par l'intermédiaire d'une interface de conservation en mémoire (STIF) incluse dans l'unité fonctionnelle formée dans un registre distribué (DTL) pour un procédé de validation (VLP) et/ou un procédé d'audit (ADP).

12. Gadget (GDG) selon la revendication 10 ou 11, **caractérisé par**
une interface externe (EXIF), qui est destinée à compléter l'unité fonctionnelle et, en plus des autres interfaces (CIF, LLIF, MRSIF, MRDIF), est raccordée à l'unité de traitement centrale (CPU), l'unité fonctionnelle formée comme telle pouvant être raccordée par l'intermédiaire de l'interface externe (EXIF) à une agence de régulation (RLA) locale ou internationale ou à une partie tierce avec licence (LTP) de sorte que le procédé de validation (VLP) et/ou le procédé d'audit (ADP) soit exécuté par l'agence de régulation (RLA) ou la partie tierce avec licence (LTP) de telle manière que, en conséquence de la demande (req) par l'agence (RLA) ou la partie tierce (LTP) des enregistrements des actions (SSDA, SSOA), des actions signées par un certificat et de la fenêtre temporelle de contact calculée (CTW_{d}, CTW_{nd}), soient soit conservées en mémoire localement ou à partir du registre distribué (DTL), ainsi que les données de localisation (LZD), les données de système radio mobiles (MRSD, SSD) et les données de détection radio mobiles (MRDD, SOD) soient transmises par l'intermédiaire de l'interface externe (EXIF) à l'agence (RLA) ou la partie tierce (LTP) de sorte que l'agence de régulation (RLA) ou la partie tierce (LTP) soit en mesure de (i) calculer (ccl) en fonction des données de localisation (LZD), des données de système radio mobiles (MRSD, SSD) et des données de détection radio mobiles (MRDD, SOD) un procédé de validation et/ou la fenêtre temporelle de contact relative au procédé d'audit (CTW_{VLP,ADP}) et (ii) comparer (cpr) la fenêtre temporelle de contact demandée (CTW_{d}, CTW_{nd}) au procédé de validation et/ou à la fenêtre temporelle de contact relative au procédé d'audit (CTW_{VLP,ADP}).

13. Gadget (GDG) selon la revendication 12, **caractérisé en ce que** l'unité fonctionnelle formée de manière complémentaire par l'interface externe (EXIF) et raccordée à l'unité de traitement centrale (CPU) peut être raccordée par l'intermédiaire de l'interface externe (EXIF) à l'agence de régulation (RLA) ou la partie tierce (LTP) de sorte que l'agence de régulation (RLA) ou la partie tierce (LTP) soit en mesure, en fonction du procédé de validation calculé et/ou de la fenêtre temporelle de contact relative au procédé d'audit (CTW_{VLP,ADP}) de déclencher par l'intermédiaire de l'interface externe (EXIF) le procédé d'arrêt (SDP) et le procédé de mise en marche (SOP) de l'émetteur sans fil (WTM).

14. Gadget (GDG) selon l'une quelconque des revendications 9 à 13, **caractérisé en ce que**
les données de détection radio mobiles (MRDD, SOD) sont des données de capteur générées par un radar ou un appareil de prise de vues détectant des dispositifs de transmission mobiles du système radio mobile intermittent (IMRS, SS).

15. Gadget (GDG) selon l'une quelconque des revendications 9 à 14, **caractérisé en ce que**
les données de détection radio mobiles (MRDD, SOD) sont des données descriptives de trajectoire relatives à des trajectoires des dispositifs de transmission mobiles, tels que des véhicules aériens sans pilote (UAV), des véhicules à guidage automatisé (AGV), des voitures, des camions, des avions, etc. du système radio mobile intermittent (IMRS, SS).

16. Gadget (GDG) selon l'une quelconque des revendications 9 à 15, **caractérisé en ce que**
le système radio mobile intermittent (IMRS, SS) est un système à satellites fonctionnant sur un service d'exploration de la Terre par satellite (EESS) et fournissant des données de système à satellites (SSD) sous la forme des données de système radio mobiles (MRSD, SSD) et des données d'orbite de satellite (SOD) sous la forme des données de détection radio mobiles (MRDD, SOD).

17. Gadget (GDG) selon l'une quelconque des revendications 9 à 16, **caractérisé en ce que**
le gadget (GDG) fait partie de la station de base (BS) ou du point d'accès (AP).
